# EUROPÄISCHE PATENTSCHRIFT

(11) **EP 3 100 874 B1**
(45) Veröffentlichungstag und Bekanntmachung des Hinweises auf die Patenterteilung: **13.06.2018**
(21) Anmeldenummer: 16153055.5
(22) Anmeldetag: 28.01.2016
(51) Int. Cl.: B60C 1/00, B60C 11/00, B60C 19/08

(54) **NUTZFAHRZEUGREIFEN**
COMMERCIAL VEHICLE TYRE
PNEUMATIQUE DE VÉHICULE UTILITAIRE

(30) Priorität: 19.05.2015 DE 102015209088
(43) Veröffentlichungstag der Anmeldung: 07.12.2016
(73) Patentinhaber: Continental Reifen Deutschland GmbH, 30165 Hannover (DE)
(72) Erfinder: Jungk, Juliane, 30916 Isernhagen (DE); Poland, Bridget, 30159 Hannover (DE)
(74) Vertreter: Finger, Karsten

(56) Entgegenhaltungen:
- DE-A1- 19 850 766
- JP-A- 2012 171 588
- JP-A- 2013 006 571

## Beschreibung

Die Erfindung betrifft einen Nutzfahrzeugreifen gemäß dem Oberbegriff des unabhängigen Anspruchs 1. Es ist bekannt und üblich, in Laufstreifen von Nutzfahrzeugreifen Mischungsverbände bestehend aus einer Laufstreifencap und einer radial innerhalb der Laufstreifencap verlaufenden Laufstreifenbase einzusetzen. Die Laufstreifencap und die Laufstreifenbase sind dabei aus unterschiedlichen Kautschukmischungen gefertigt. Diese Maßnahme gestattet es, bestimmte erwünschte Eigenschaften des Laufstreifens mit Hilfe von unterschiedlichen Mischungssystemen zu verbessern. Beispielsweise kann dadurch die Energiedissipation in der Laufstreifenbase reduziert werden, ohne dass die Abriebeigenschaften oder der Nassgriff des Reifens beeinflusst wird.

Nutzfahrzeugreifen, welche insbesondere an Fahrzeugen mit Baustelleneinsatz verwendet werden, zeigen oft ein charakteristisches Abriebbild mit auffallenden Schäden im mittleren Bereich des Laufstreifens. Die auftretenden Schäden sind Einrisse, Abblätterungen und Ausbrüche, die als "Chipping und Chunking" bezeichnet werden. Die seitlichen Abschnitte des Laufstreifens zeigen weitaus weniger Einrisse und Ausbrüche. Dieses charakteristische Abriebbild lässt sich mit einer unterschiedlichen Druckverteilung in der Aufstandsfläche des Reifens erklären.

Es ist ferner bekannt, die Laufstreifencap von Nutzfahrzeugreifen aus einer Silica enthaltenden Kautschukmischung herzustellen, um eine bessere "Chipping und Chunking"-Resistenz zu erzielen. Nutzfahrzeugreifen mit einer derartigen Laufstreifencap weisen daher auch eine gute Runderneuerungsfähigkeit auf. Silica enthaltende Kautschukmischungen weisen allerdings im Vergleich zu ausschließlich mit Ruß gefüllten Kautschukmischungen keine oder eine deutlich geringere elektrische Leitfähigkeit auf. Um die im Betrieb des Reifens auftretende elektrostatische Aufladungen ableiten zu können und um unangenehme Entladungsvorgänge zu verhindern, es ist üblich, den Laufstreifen im mittleren Bereich mit einem sogenannten Carbon Center Beam zu versehen. Dieser ist meist ein über den Laufstreifenumfang verlaufender, im Laufstreifen eingebauter Gummistreifen aus einer elektrisch leitfähigen Kautschukmischung, welcher beispielsweise aus der rußgefüllten Kautschukmischung der Laufstreifenbase gefertigt ist. Die elektrische leitfähige Laufstreifenbase enthält eine entsprechend große Rußmenge, besitzt dadurch allerdings einen geringeren Weiterreißwiderstand als eine Kieselsäure enthaltende Kautschukmischung. Etwaige tiefere Schnitte in der Laufstreifencap können daher die Laufstreifenbase durchdringen, bis zum Gürtelverband reichen und diesen beschädigen. Außerdem wird der Carbon Center Beam üblicherweise im mittleren Bereich des Laufstreifens eingebracht, sodass dieser unter harschen Off-Road-Bedingungen leicht beschädigt werden kann.

Aus der DE 10 2011 001 877 A1 ist ein PKW-Reifen bekannt, welcher einen in radialer Richtung zweischichtig aufgebauten Laufstreifen aufweist, welcher aus einer die Profilierung enthaltenden Laufstreifencap und einer radial innerhalb der Laufstreifencap verlaufenden Laufstreifenbase besteht. Die Laufstreifenbase weist zumindest zwei Teile auf, einen ersten Teil aus einer rollwiderstandsoptimierten Kautschukmischung und einen zweiten Teil aus einer elektrisch leitfähigen Kautschukmischung, wobei der zweite Teil in einem der Schulterbereiche positioniert ist. Die Laufstreifenbase weist ferner einen elektrisch leitfähigen Kautschukkeil auf, welcher die Laufstreifencap in radialer Richtung vollständig durchsetzt. Dieser bekannte Reifen soll einen geringen Rollwiderstand aufweisen.

Die DE 198 50 766 A1 offenbart einen weiteren PKW-Reifen, welcher einen geringen Rollwiderstand aufweisen soll. Der Laufstreifen des PKW-Reifens weist eine Cap/Base-Konstruktion auf, wobei die Laufstreifenbase einen zentralen Baseteil und einen schulterseitigen Baseteil umfasst. Der schulterseitige Baseteil besteht aus einem härteren Gummimaterial als der zentrale Baseteil. In einer der Laufstreifenschultern verläuft ein elektrisch leitfähiger Gummistreifen, welcher den Laufstreifen in radialer Richtung durchsetzt und den elektrisch leitfähigen schulterseitigen Baseteil kontaktiert.

Aus der JP 2013 006 571 A ist ein Nutzfahrzeugreifen gemäß dem Oberbegriff des unabhängigen Anspruchs 1 bekannt. Im Besonderen offenbart die JP 2013 006 571 A einen Nutzfahrzeugreifen mit einer einteilig ausgeführten elektrisch leitfähigen Laufstreifenbase. Die JP 2012 171 588 A offenbart einen PKW-Reifen mit einem eine Laufstreifencap und eine einteilige Laufstreifenbase aufweisenden Laufstreifen.

Der Erfindung liegt die Aufgabe zugrunde, bei einem Nutzfahrzeugreifen der eingangs genannten Art die an sich bekannte Silica-Technologie innovativ umzusetzen, um vor allem im Laufstreifenmittelbereich sicherzustellen, dass etwaige Einschnitte nicht bis zum Gürtel durchdringen können. Die Ableitung der im Betrieb des Reifens auftretenden elektrostatischen Aufladungen soll nach wie vor gewährleistet sein.

Gelöst wird die gestellte Aufgabe erfindungsgemäß dadurch, dass sich die Laufstreifenbase aus zwei schulterseitig angeordneten Baseteilen aus einem elektrisch leitfähigen Gummimaterial und einem zentralen Baseteil aus einem elektrisch nicht leitfähigen, einen elektrischen Widerstand > 1 x 10⁸ Ohm aufweisenden, Silica enthaltenden Gummimaterial zusammensetzt, wobei je ein elektrisch leitfähiger Gummistreifen eine elektrisch leitfähige Verbindung zwischen jedem schulterseitigen Baseteil und der Außenfläche der Laufstreifencap herstellt, und wobei jeder schulterseitige Baseteil laufstreifeninnenseitig höchstens bis zu einer sich in radialer Richtung erstreckenden Ebene reicht, welche durch jene Stellen der an der Laufstreifenoberfläche befindlichen, laufstreifeninnenseitigen Randkante der schulterseitigen Profilrippe verläuft, welche sich am weitesten laufstreifenaußenseitig befinden. Durch das erfindungsgemäße Anordnen je eines elektrisch leitfähigen Baseteiles in einem der Schulterbereiche des Nutzfahrzeugreifens kann das Ableiten elektrostatischer Aufladungen über die Gummistreifen optimal gewährleistet werden. Der verbesserte, d.h. höhere, Weiterreißwiderstand des zentralen Baseteiles führt zu einer erhöhten Schnittbeständigkeit im mittleren Laufstreifenbereich, sodass keine oder kaum Einschnitte durch die Laufstreifenbase bis zum Gürtelverband durchdringen können und dieser optimal gegen etwaige damit verbundene Beschädigungen geschützt ist.

Bei einer bevorzugten Ausführungsform der Erfindung endet jeder schulterseitige Baseteil in einem in axialer Richtung ermittelten Abstand von der sich in radialer Richtung erstreckenden Ebene, welche durch jene Stellen der an der Laufstreifenoberfläche befindlichen, laufstreifeninnenseitigen Randkante der schulterseitigen Profilrippe verläuft, welche sich am weitesten laufstreifenaußenseitig befinden, wobei der Abstand höchstens 50% der innerhalb der Bodenaufstandsfläche in axialer Richtung ermittelten Breite der schulterseitigen Profilrippe beträgt. In diesen Bereichen können die die Carbon Center Beams bildenden Streifen gut angeordnet werden.

Besonders bevorzugt ist ferner, dass die dem Gummimaterial der schulterseitigen Baseteile zugrunde liegende Kautschukmischung als Füllstoff ausschließlich Ruß enthält. Dadurch wird den schulterseitigen Baseteilen eine gute elektrische Leitfähigkeit verliehen.

Bei weiteren vorteilhaften Ausführungsformen der Erfindung enthält die dem Gummimaterial des zentralen Baseteiles zugrunde liegende Kautschukmischung entweder als Füllstoff Silica oder als Füllstoffe Silica und Ruß, in derartigen Anteilen, dass der zentrale Baseteil einen elektrischen Widerstand > 1 x 10⁸ Ohm aufweist.

Es vereinfacht die Herstellung erfindungsgemäßer Nutzfahrzeugreifen, wenn die Gummistreifen aus dem Gummimaterial der elektrisch leitfähigen Baseteile bestehen und wenn der zentrale Baseteil aus dem Gummimaterial der Laufstreifencap besteht.

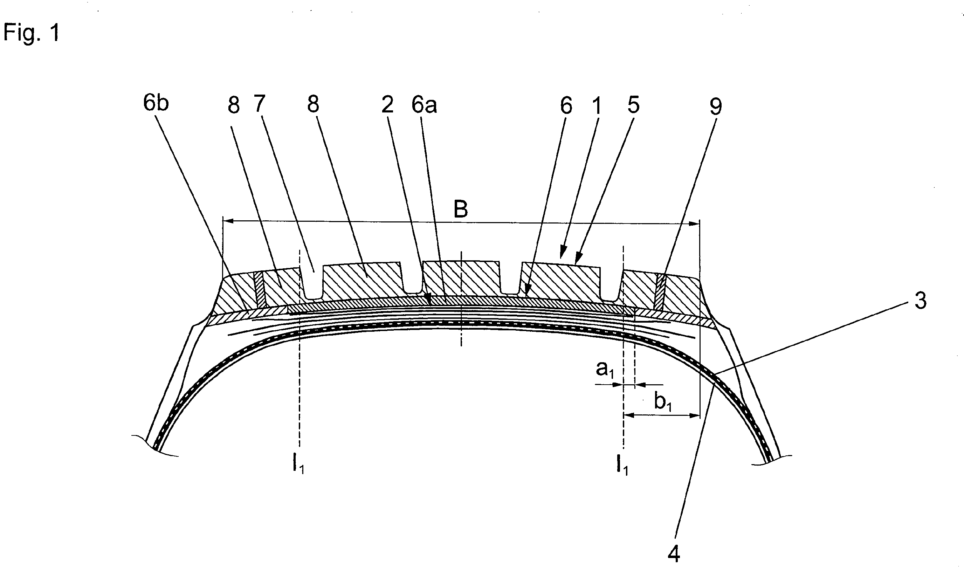

Weitere Merkmale, Vorteile und Einzelheiten der Erfindung werden nun anhand der einzigen Figur, Fig. 1, welche einen schematischen Querschnitt durch den Laufstreifenbereich eines Nutzfahrzeugreifens mit einer Ausführungsform gemäß der Erfindung darstellt, näher erläutert.

In Fig. 1 sind von den üblichen Bauteilen eines Nutzfahrzeugreifens in Radialbauart ein Laufstreifen 1, radial innerhalb des Laufstreifens 1 ein zumindest dreilagiger, vorzugsweise vierlagiger, Gürtelverband 2, dessen Gürtellagen eine elektrisch leitfähige Gürtelgummierung aufweisen, eine mit Festigkeitsträgern verstärkte Radialkarkasse 3 und eine luftdichte Innenschicht 4 dargestellt. Von den nicht bezeichneten Seitenwänden, welche aus einem elektrisch leitfähigen oder aus einem elektrisch nicht leitfähigen Gummimaterial bestehen können, sind lediglich die axial äußeren Endabschnitte gezeigt. Die Wulstbereiche mit Wulstkernen, Kernprofilen und den weiteren üblicherweise in den Wulstbereichen vorgesehenen Verstärkungslagen sind nicht dargestellt.

Der Laufstreifen 1 ist in radialer Richtung zweischichtig aufgebaut und setzt sich aus einer die Profilierung enthaltenden Laufstreifencap 5 und einer radialer innerhalb der Laufstreifencap 5 verlaufenden Laufstreifenbase 6 zusammen. Die Laufstreifenbase 6 erstreckt sich in axialer Richtung über die Breite der Laufstreifencap 5.

Beim gezeigten Ausführungsbeispiel weist der Laufstreifen 1 vier innerhalb der Laufstreifencap 5 verlaufende Umfangsrillen 7 auf, welche die für Nutzfahrzeugreifen übliche maximale Profiltiefe, die insbesondere 8,0 mm bis 12,0 mm beträgt, aufweisen. Die Umfangsrillen 7 gliedern den Laufstreifen 1 in in Umfangsrichtung umlaufende Profilrippen 8, die blockartig strukturiert sein können oder aus Profilblöcken bestehen können. Die axial am weitesten außen liegenden Umfangsrillen 7 werden nachfolgend als schulterseitige Umfangsrillen 7 bezeichnet, die axial außerhalb der schulterseitigen Umfangsrillen 7 verlaufenden Profilrippen 8 nachfolgend als schulterseitige Profilrippen 8. Die schulterseitigen Profilrippen 8 weisen innerhalb der Bodenaufstandsfläche jeweils eine Breite b₁ von 10% bis 25% der Breite B des Laufstreifens 1 im bodenberührenden Teil auf. Die Breite b₁ endet laufstreifeninnenseitig an einer sich in radialer Richtung erstreckenden Ebene, welche durch jene Stellen der an der Laufstreifenoberfläche befindlichen, laufstreifeninnenseitigen Randkante der schulterseitigen Profilrippe 8 verläuft, welche sich am weitesten laufstreifenaußenseitig befinden. Bei gerade in Umfangsrichtung umlaufenden schulterseitigen Umfangsrillen 7 verläuft diese Ebene entlang der laufstreifenaußenseitigen Randkante. Diese Ebenen sind in der in Fig. 1 gezeigten Schnittdarstellung als Linien l₁ eingezeichnet.

Die Laufstreifenbase 6 setzt sich aus einem zentralen Baseteil 6a und je einem an diesen in axialer Richtung anschließenden schulterseitigen Baseteil 6b zusammen. Jeder Baseteil 6a, 6b weist über den Reifenumfang eine im Wesentlichen konstante axiale Breite auf. Die schulterseitigen Baseteile 6b verlaufen radial innerhalb der jeweiligen schulterseitigen Profilrippe 8 und reichen laufstreifeninnenseitig maximal bis zu den durch die Linien l₁ gekennzeichneten Ebenen. Die schulterseitigen Baseteile 6b verlaufen vorzugsweise zumindest über 50% der Breite b₁, wobei ein in axialer Richtung ermittelter Abstand a₁ des axial inneren Randes der Baseteile 6b von der durch die Linie l₁ gekennzeichnete Ebene höchstens 50% der Breite b₁ beträgt.

Die Laufstreifencap 5 wird aus einer einen hohen Anteil an Silica (fein verteilte Kieselsäure) aufweisenden elektrisch nicht leitfähigen Kautschukmischung hergestellt und besteht dementsprechend aus einem elektrisch nicht leitfähigen Gummimaterial. Unter einem elektrisch nicht leitfähigen Gummimaterial wird dabei ein solches verstanden, welches einen elektrischen Widerstand > 1 x 10⁸ Ohm aufweist

Der zentrale Baseteil 6a wird aus einer als Füllstoff ebenfalls Silica enthaltenden Kautschukmischung gefertigt und ist elektrisch nicht leitfähig, wobei der zentrale Baseteil 6a auch aus der Kautschukmischung der Laufstreifencap 5 gefertigt sein kann. Die dem zentralen Baseteil 6a zugrunde liegende Kautschukmischung kann als Füllstoff ferner einen geringen Anteil an Ruß enthalten. Die Kautschukmischungen für den zentralen Baseteil 6a und die Laufstreifencap 5 enthalten vorzugsweise unterschiedliche Komponenten, insbesondere unterschiedliche Kautschuke. Es ist jedoch auch möglich, die für die Laufstreifencap 5 vorgesehene Kautschukmischung im zentralen Baseteil 6a zu verwenden.

Die den schulterseitigen Baseteilen 6b zugrunde liegende Kautschukmischung weist als Füllstoff vorzugsweise ausschließlich Ruß auf. Aus solchen Kautschukmischungen hergestelltes Gummimaterial und damit auch die schulterseitigen Baseteile 6b weisen eine hohe elektrische Leitfähigkeit auf.

Die Laufstreifencap 5 ist in jedem Schulterbereich durch einen sich in radialer Richtung erstreckenden und in Umfangsrichtung umlaufenden Gummistreifen 9, einen sogenannten Carbon Center Beam, in axialer Richtung zweigeteilt. Jeder der Gummistreifen 9 verläuft jeweils vom schulterseitigen Baseteil 6b bis zur Laufstreifenoberfläche und ist aus einer elektrisch leitfähigen Kautschukmischung, vorzugsweise aus der Kautschukmischung der schulterseitigen Baseteile 6b, gefertigt. Jeder Carbon Center Beam bildet daher eine leitfähige Passage zwischen der Laufstreifenoberfläche und einem der schulterseitigen Baseteile 6b.

### Bezugsziffernliste

- 1: Laufstreifen
- 2: Gürtel
- 3: Radialkarkasse
- 4: Innenschicht
- 5: Laufstreifencap
- 6: Laufstreifenbase
- 6a: zentraler Baseteil
- 6b: schulterseitiger Baseteil
- 7: Umfangsrille
- 8: Profilrippe
- 9: Gummistreifen
- a₁: Abstand
- B: Breite
- b₁: Breite
- l₁: Linie (Ebene)

## Patentansprüche

1. Nutzfahrzeugreifen in Radialbauart mit einem Laufstreifen (1) mit zwei in Umfangsrichtung verlaufenden schulterseitigen Umfangsrillen (7), welche jeweils eine schulterseitig verlaufende Profilrippe (8) laufstreifeninnenseitig begrenzen, wobei der Laufstreifen (1) in radialer Richtung zweischichtig aufgebaut ist und sich aus einer die Profilierung enthaltenden Laufstreifencap (5) und einer radial innerhalb der Laufstreifencap (5) verlaufenden Laufstreifenbase (6) zusammensetzt, wobei die Laufstreifencap (5) aus einem elektrisch nicht leitfähigen, einen elektrischen Widerstand > 1 x 10⁸ Ohm aufweisenden, Gummimaterial besteht und die Laufstreifenbase (6) zumindest einen Baseteil (6b) aus einem elektrisch leitfähigen Gummimaterial aufweist, wobei zumindest ein in Umfangsrichtung umlaufender Gummistreifen (9) aus einem elektrisch leitfähigen Gummimaterial die Laufstreifencap (5) in radialer Richtung durchsetzt und eine elektrisch leitfähige Verbindung zwischen dem zumindest einen Baseteil (6b) und der Außenfläche der Laufstreifencap (5) herstellt,
**dadurch gekennzeichnet,**
**dass** sich die Laufstreifenbase (6) aus zwei schulterseitig angeordneten Baseteilen (6b) aus einem elektrisch leitfähigen Gummimaterial und einem zentralen Baseteil (6a) aus einem elektrisch nicht leitfähigen, einen elektrischen Widerstand > 1 x 10⁸ Ohm aufweisenden, Silica enthaltenden Gummimaterial zusammensetzt, wobei je ein elektrisch leitfähiger Gummistreifen (9) eine elektrisch leitfähige Verbindung zwischen jedem schulterseitigen Baseteil (6b) und der Außenfläche der Laufstreifencap (5) herstellt, und wobei jeder schulterseitige Baseteil (6b) laufstreifeninnenseitig höchstens bis zu einer sich in radialer Richtung erstreckenden Ebene (l₁) reicht, welche durch jene Stellen der an der Laufstreifenoberfläche befindlichen, laufstreifeninnenseitigen Randkante der schulterseitigen Profilrippe (8) verläuft, welche sich am weitesten laufstreifenaußenseitig befinden.

2. Nutzfahrzeugreifen nach Anspruch 1, **dadurch gekennzeichnet, dass** jeder schulterseitige Baseteil (6b) in einem in axialer Richtung ermittelten Abstand (a₁) von der sich in radialer Richtung erstreckenden Ebene (l₁) endet, welche durch jene Stellen der an der Laufstreifenoberfläche befindlichen, laufstreifeninnenseitigen Randkante der schulterseitigen Profilrippe (8) verläuft, welche sich am weitesten laufstreifenaußenseitig befinden, wobei der Abstand (a₁) höchstens 50% der innerhalb der Bodenaufstandsfläche in axialer Richtung ermittelten Breite (b₁) der schulterseitigen Profilrippe (8) beträgt.

3. Nutzfahrzeugreifen nach Anspruch 1 oder 2, **dadurch gekennzeichnet, dass** die dem Gummimaterial der schulterseitigen Baseteile (6b) zugrunde liegende Kautschukmischung als Füllstoff ausschließlich Ruß enthält.

4. Nutzfahrzeugreifen nach einem der Ansprüche 1 bis 3, **dadurch gekennzeichnet, dass** die dem Gummimaterial des zentralen Baseteiles (6a) zugrunde liegende Kautschukmischung als Füllstoff Silica enthält.

5. Nutzfahrzeugreifen nach einem der Ansprüche 1 bis 4, **dadurch gekennzeichnet, dass** die dem Gummimaterial des zentralen Baseteiles (6a) zugrunde liegende Kautschukmischung als Füllstoffe Silica und Ruß enthält, in derartigen Anteilen, dass der zentrale Baseteil (6a) einen elektrischen Widerstand > 1 x 10⁸ Ohm aufweist.

6. Nutzfahrzeugreifen nach einem der Ansprüche 1 bis 5, **dadurch gekennzeichnet, dass** die Gummistreifen (9) aus dem Gummimaterial der elektrisch leitfähigen Baseteile (6b) bestehen.

7. Nutzfahrzeugreifen nach einem der Ansprüche 1 bis 6, **dadurch gekennzeichnet, dass** der zentrale Baseteil (6a) aus dem Gummimaterial der Laufstreifencap (5) besteht.

## Claims

1. Utility vehicle tyre of radial type of construction, having a tread (1) with two shoulder-side circumferential channels (7) which run in a circumferential direction and which in each case delimit a profile rib (3), running at the shoulder side, towards the tread inner side, wherein the tread (1) is of two-layer construction in a radial direction and is made up of a tread cap (5), which comprises the profiling, and of a tread base (6) running radially within the tread cap (5), wherein the tread cap (5) is composed of an electrically non-conductive rubber material which has an electrical resistance of > 1 x 10⁸ ohm, and the tread base (6) has at least one base part (6b) composed of an electrically conductive rubber material, wherein at least one rubber strip (9) running in encircling fashion in a circumferential direction and composed of an electrically conductive rubber material extends in a radial direction through the tread cap (5) and produces an electrically conductive connection between the at least one base part (6b) and the outer surface of the tread cap (5), **characterized in that** the tread base (6) is made up of two base parts (6b), which are arranged at the shoulder side and which are composed of an electrically conductive rubber material, and of a central base part (6a), which is composed of an electrically non-conductive rubber material which has an electrical resistance of > 1 x 10⁸ ohm and which comprises silica, wherein in each case one electrically conductive rubber strip (9) produces an electrically conductive connection between each shoulder-side base part (6b) and the outer surface of the tread cap (5), and wherein each shoulder-side base part (6b) extends towards the tread inner side at most as far as a plane (l₁) which extends in a radial direction and which runs through those points of the marginal edge, situated on the tread surface and facing towards the tread inner side, of the shoulder-side profile rib (8) which are situated furthest towards the tread outer side.

2. Utility vehicle tyre according to Claim 1, **characterized in that** each shoulder-side base part (6b) ends at a distance (a₁), determined in an axial direction, from the plane (l₁) which extends in a radial direction and which runs through those points of the marginal edge, situated on the tread surface and facing towards the tread inner side, of the shoulder-side profile rib (8) which are situated furthest towards the tread outer side, wherein the distance (a₁) amounts to at most 50% of the width (b₁), determined in an axial direction within the ground contact area, of the shoulder-side profile rib (8).

3. Utility vehicle tyre according to Claim 1 or 2, **characterized in that** the rubber mixture that forms a basis for the rubber material of the shoulder-side base parts (6b) comprises exclusively soot as filler material.

4. Utility vehicle tyre according to one of Claims 1 to 3, **characterized in that** the rubber mixture that forms a basis for the rubber material of the central base part (6a) comprises silica as filler material.

5. Utility vehicle tyre according to one of Claims 1 to 4, **characterized in that** the rubber mixture that forms a basis for the rubber material of the central base part (6a) comprises silica and soot as filler materials, in fractions such that the central base part (6a) has an electrical resistance of > 1 x 10⁸ ohm.

6. Utility vehicle tyre according to one of Claims 1 to 5, **characterized in that** the rubber strips (9) are composed of the rubber material of the electrically conductive base parts (6b).

7. Utility vehicle tyre according to one of Claims 1 to 6, **characterized in that** the central base part (6a) is composed of the rubber material of the tread cap (5).

## Revendications

1. Bandage pour roue de véhicule utilitaire, à structure radiale, présentant
une bande de roulement (1) dotée de deux rainures périphériques (7) s'étendant à côté des épaulements dans la direction périphérique et délimitant chacune du côté intérieur de la bande de roulement une nervure profilée (8) s'étendant à côté de l'épaulement,
la bande de roulement (1) présentant dans la direction radiale une structure en deux couches et étant constituée d'un chapeau (5) de bande de roulement contenant le profil et d'une base (6) de bande de roulement qui s'étend radialement à l'intérieur du chapeau (5) de bande de roulement,
le chapeau (5) de bande de roulement étant constitué d'un matériau de caoutchouc électriquement non conducteur présentant une résistance électrique > 1 x 10⁸ Ohms et la base (6) de la bande de roulement présentant au moins une partie de base (6b) en un matériau de caoutchouc électriquement conducteur,
au moins une bande périphérique de caoutchouc (9) en un matériau de caoutchouc électriquement conducteur s'étendant dans la direction périphérique et traversant le chapeau (5) de bande de roulement dans la direction radiale, une liaison électriquement conductrice étant établie entre l'au moins une partie de base (6b) et la surface extérieure du chapeau (5) de bande de roulement,
**caractérisé en ce que**
la base (6) de bande de roulement se compose de deux parties de base (6b) situées côté épaulement, en un matériau de caoutchouc électriquement conducteur, et d'une partie de base centrale (6a) en un matériau de caoutchouc non conducteur électriquement présentant une résistance électrique supérieure à 1 x 10⁸ Ohm, contenant de la silice, une bande de caoutchouc (9) électriquement conductrice établissant une liaison électriquement conductrice entre chaque partie de base (6b) côté épaulement et la surface extérieure du chapeau (5) de bande de roulement, et chaque partie de base (6b) située côté épaulement s'étendant du côté intérieur de la bande de roulement au plus jusqu'à un plan (l₁) s'étendant dans la direction radiale et passant par tous les emplacements, situés le plus à l'extérieur de la bande de roulement, du bord, situé au niveau de la surface de la bande de roulement, à l'intérieur de la bande de roulement, de la nervure profilée (8) située côté épaulement.

2. Bandage pour roue de véhicule utilitaire selon la revendication 1, **caractérisé en ce que** chaque partie de base (6b) située côté épaulement se termine à une distance, mesurée dans la direction axiale (a₁), du plan (l₁) s'étendant dans la direction radiale, qui s'étend à travers les emplacements du bord de la nervure profilée (8) située côté épaulement, situés au niveau de la surface de la bande de roulement, du côté intérieur de la bande de roulement, qui sont les plus éloignés du côté extérieur de la bande de roulement, la distance (a₁) valant au maximum 50 % de la largeur (b₁) de la nervure profilée (8) côte épaulement mesurée à l'intérieur de la surface d'appui au sol dans la direction axiale.

3. Bandage pour roue de véhicule utilitaire selon la revendication 1 ou 2, **caractérisé en ce que** le mélange de caoutchouc à la base du matériau de caoutchouc des parties de base (6b) situées côté épaulement contient comme charge uniquement du noir de carbone.

4. Bandage pour roue de véhicule utilitaire selon l'une des revendications 1 à 3, **caractérisé en ce que** le mélange de caoutchouc à la base du matériau de caoutchouc de la partie de base (6a) centrale contient comme charge de la silice.

5. Bandage pour roue de véhicule utilitaire selon l'une des revendications 1 à 4, **caractérisé en ce que** le mélange de caoutchouc à la base du matériau de caoutchouc de la partie de base (6a) centrale contient comme charge de la silice et du noir de carbone en proportions telles que la partie de base (6a) centrale présente une résistance électrique > 1 x 10⁸ Ohms.

6. Bandage pour roue de véhicule utilitaire selon l'une des revendications 1 à 5, **caractérisé en ce que** les bandes de caoutchouc (9) sont constituées du matériau de caoutchouc des parties de base (6b) électriquement conductrices.

7. Bandage pour roue de véhicule utilitaire selon l'une des revendications 1 à 6, **caractérisé en ce que** la partie de base (6a) centrale est constituée du matériau de caoutchouc du chapeau (5) de bande de roulement.
